# EUROPÄISCHE PATENTSCHRIFT

(11) **EP 1 259 549 B1**
(45) Veröffentlichungstag und Bekanntmachung des Hinweises auf die Patenterteilung: **30.03.2005**
(21) Anmeldenummer: 01915243.8
(22) Anmeldetag: 14.02.2001
(51) Int. Cl.: C08B 30/12, C08B 30/18

(54) **VERFAHREN ZUR HERSTELLUNG THERMOCHEMISCH MODIFIZIERTER STÄRKE**
METHOD FOR PRODUCING THERMOCHEMICALLY MODIFIED STARCH
PROCEDE DE FABRICATION D'AMIDON MODIFIE THERMOCHIMIQUEMENT

(30) Priorität: 16.02.2000 DE 10007061
(43) Veröffentlichungstag der Anmeldung: 27.11.2002
(73) Patentinhaber: Bayer CropScience GmbH, 65929 Frankfurt/Main (DE)
(72) Erfinder: KLINGLER, Rudolf, 13437 Berlin (DE); BUSCH, Karl-Georg, 14532 Kleinmachnow (DE)
(74) Vertreter: Lederer, Franz, Dr.
(86) Internationale Anmeldenummer: PCT/EP2001/001609
(87) Internationale Veröffentlichungsnummer: WO 2001/060867

(56) Entgegenhaltungen:
- US-A- 3 523 938
- KLINKLER R ET AL.: "Säureabbau von Stärke unter semi-dry Bedingungen" STARCH/STÄRKE, Bd. 49, Nr. 10, 1997, Seiten 391-395, XP001000513 Weilheim

## Beschreibung

Die vorliegende Erfindung liegt auf dem technischen Gebiet der physikalischchemischen Stärkemodifikation und betrifft ein Verfahren zur thermochemischen Modifizierung von Stärke, die nach dem erfindungsgemäßen Verfahren erhältlichen thermochemisch modifizierten Stärken mit dünnkochenden bis thermoreversibel-gelbildenden Eigenschaften, sowie deren Verwendung.

Herkömmliche durch Säuremodifikation erhaltene Stärken, z.B. dünnkochende Stärken, werden in der Regel mittels eines sog. "Slurry"-Verfahrens hergestellt. Hierbei wird die wässerige Suspension einer Stärke in Gegenwart von Mineralsäure (z.B. HCl, H₂SO₄ oder H₃PO₄) unterhalb ihrer Verkleisterungstemperatur mehrere Stunden lang gerührt, danach neutralisiert, gewaschen, entwässert und schließlich getrocknet (Whistler & Pashall: Starch: Chemistry and Technology Vol. II, Academic Press, New York and London, 1969, S. 219).

Eine auf diese Weise modifizierte Stärke zeigt gegenüber der nativen Vergleichsprobe eine reduzierte Dickungsleistung beim Erhitzen und eine verstärkte Gelbildungsneigung nach dem Abkühlen. Das veränderte Eigenschaftsprofil dieser modifizierten Stärke eröffnet zahlreiche technische Anwendungen, u.a. im Lebensmittelbereich.

Der Einsatz von säuremodifizierter Stärke gewinnt in der Lebensmittelindustrie zunehmend an Bedeutung. Die säuremodifizierten Stärken werden vor allem zur Herstellung von Lebensmitteln insbesondere Süßwaren verwendet, z.B. auch als Ersatzstoffe für Gelatine und Gummi arabicum. Es bestehen aber auch Anwendungsmöglichkeiten in technischen Bereichen, so z.B. in der Garnschlichtung bei der Textilherstellung sowie bei der Papierherstellung zur Verbesserung der Abriebfestigkeit und Bedruckbarkeit.

Neben den bekannten "Slurry"-Verfahren (s.o.) wurde von Klingler et al. ein "Semi-dry"-Verfahren zur Herstellung säuremodifizierter Palerbsenstärke beschrieben (Klingler et al., Starch/Stärke 1997, 49, 391-395), mit dem nicht nur dünnkochende Stärken erhalten werden, sondern das auch zu einem hochwertigen thermoreversiblen gelbildenden Dextrinprodukt führt. Vorteile des beschriebenen Verfahrens gegenüber dem "Slurry"-Verfahren sind z.B. der niedrigere Chemikalienverbrauch, eine kürzere Reaktionsdauer, die Verminderung von Nebenprodukten und Produktverlusten sowie die Vermeidung von Abwässern und deren Entsorgung.

Nachteile des beschriebenen Verfahrens bestehen in der nicht ausreichenden quantitativen Verfügbarkeit von Palerbsenstärke, die sich in dessen Wirtschaftlichkeit widerspiegelt sowie in dem begrenzten Eigenschaftsspektrum der säuremodifizierten Palerbsenstärken.

Aufgabe der vorliegenden Erfindung ist es daher, hochwertige thermochemisch modifizierte Stärken alternativ bereitzustellen, die die oben genannten Nachteile überwinden und in bezug auf ihre Eigenschaften den unterschiedlichen industriellen Anforderungen gerecht werden.

Überraschenderweise wurde nun gefunden, dass durch das in den Ansprüchen näher bezeichnete erfindungsgemäße thermochemische Verfahren hochwertige dünnkochende Stärken und außerdem reversibel gelbildende Dextrine in ausreichender Quantität wirtschaftlich bereitgestellt werden können und dabei eine breite Eigenschaftsvariabilität der erhältlichen Produkte erzielt werden kann. Das erfindungsgemäße Verfahren bietet dabei alle der oben genannten ökonomischen und ökologischen Vorteile eines "Semi-dry"-Verfahrens.
Durch die vorliegende Erfindung wird insofern eine überraschend einfache und wirtschaftliche Alternative zu den bekannten Herstellungsverfahren von thermochemisch modifizierter Stärke bereitgestellt, die in vielfältiger Weise eingesetzt werden können.

Überraschenderweise weisen die erfindungsgemäßen thermoreversibel-gelbitdenden Dextrine eine granuläre Struktur auf, die im Gegensatz zu den kommerziell erhältlichen reversibel gelbildenden Dextrinen sehr gut dispergierbar sind.

Gegenstand der vorliegenden Erfindung ist daher ein Verfahren zur thermochemischen Modifizierung von Stärke, mit Ausnahme von Palerbsenstärke, worin
a) Stärke mit einem Amylosegehalt von größer als 40 % (w/w) und einem Feuchtigkeitsgehalt von höchstens etwa 15-20 %, vorzugsweise kleiner 10 %, in Gegenwart einer Säure mit einer Geschwindigkeit von mindestens 3 K/min, speziell 3-200 K/min, vorzugsweise etwa 4-200 K/min, insbesondere etwa 5-100 K/min, besonders bevorzugt etwa 10-100 K/min auf eine Temperatur von nicht höher als etwa 50-120°C, vorzugsweise von nicht höher als etwa 65-110°C, insbesondere nicht höher als etwa 80-100°C erhitzt wird, und
b) der pH-Wert anschließend neutralisiert, vorzugsweise auf einen pH-Wert von etwa 5,5-7,5, insbesondere 6,0-6,5 eingestellt wird, wobei vor oder während des Neutralisierens die in Verfahrensschritt a) genannte Temperatur für einen Zeitraum von etwa 5 Minuten bis zu 1 Stunde, vorzugsweise bis zu 30 Minuten und insbesondere bis zu 20 Minuten beibehalten wird und/oder nach Erreichen, der in Verfahrensschritt a) genannten Temperatur auf etwa 0-35°C abgekühlt wird.

In einer weiteren Ausführungsform des erfindungsgemäßen Verfahrens wird nach Erreichen der in Verfahrensschritt a) genannten Temperatur oder nach dem Neutralisieren mit einer Geschwindigkeit von bis zu 10 K/min, vorzugsweise bis zu 5 K/min abgekühlt.

In einer besonderen Ausführungsform des erfindungsgemäßen Verfahrens wird die Stärke mit einer Geschwindigkeit von etwa 3-50 K/min, vorzugsweise 4-50 K/min auf eine Temperatur von etwa 60-120°C, vorzugsweise etwa 90-120°C erhitzt und anschließend neutralisiert.

Eine weitere Ausführungsform des erfindungsgemäßen Verfahrens dient insbesondere zur Herstellung von dünnkochender Stärke, worin in dem Verfahrensschritt a) des erfindungsgemäßen Verfahrens auf eine Temperatur erhitzt wird, die zwischen der Verkleisterungstemperatur und 15°C oberhalb der Verkleisterungstemperatur der Ausgangsstärke liegt.

Noch eine weitere Ausführungsform des erfindungsgemäßen Verfahrens dient speziell zur Herstellung von thermoreversibel gelbildenen Dextrinen, worin in dem Verfahrensschritt a) auf eine Temperatur von größer als etwa 15-50°C, vorzugsweise von größer als etwa 15-30°C, insbesondere von größer als etwa 20-25°C oberhalb der Verkleisterungstemperatur der Ausgangsstärke erhitzt wird.

In einer weiteren bevorzugten Ausführungsform des erfindungsgemäßen Verfahrens lassen sich thermoreversibel gelbildende Dextrine herstellen, indem in Schritt a) eine Säurekonzentration von etwa 40-100 mmol Säure/kg Stärke, vorzugsweise etwa 50-80 mmol Säure/kg Stärke gewählt wird und gegebenenfalls mit einer Geschwindigkeit von etwa 15-100 K/min, vorzugsweise etwa 30-100 K/min erhitzt wird.

Der Begriff "Ausgangsstärke" bezeichnet hierbei die Stärke, die in dem erfindungsgemäßen Verfahren der thermochemischen Behandlung unterzogen wird, mit Ausnahme von Palerbsenstärke.

Geeignete Möglichkeiten des Erhitzens bestehen z.B. mittels dem Fachmann bekannten Heizeinrichtungen, wobei insbesondere eine Erhitzung der Stärke auf Temperaturen von grösser als 120°C zu vermeiden ist. Bewährt haben sich hierfür entsprechend mit einer Rührvorrichtung versehene Mikrowellenöfen, wobei jedoch auch andere, dem Fachmann bekannte Heizeinrichtungen geeignet sind. Alternativ können auch ein oder mehrere der Reaktanden (Ausgangsstärken, Säure bzw. Lauge) in geeigneter Weise erhitzt werden, bevor sie miteinander in Kontakt gebracht werden, so daß gegebenenfalls keine oder nur eine geringe Heizleistung während der Reaktionsdauer erforderlich ist. Das Verfahren kann insbesondere in einem kontinuierlichen Prozess ablaufen, so dass technische Probleme bei dem Erhitzen von relativ grossen Stärkemengen vermieden werden können. Die Möglichkeiten einer hierfür geeigneten kontiniuierlichen Verfahrensführung sind dem Fachmann gut bekannt.

Das erfindungsgemäße Verfahren kann in einer weiteren Ausführungsform zur Beschleunigung der Reaktion der Stärkehydrolyse die Erhitzung unter leichter Druckerhöhung durchgeführt werden. Der für das erfindungsgemäße Verfahren geeignete Druckbereich liegt bei maximal bis zu 5 bar (500 kPa).

Optional kann das erfindungsgemäße Verfahren in Gegenwart eines Alkohols, vorzugsweise von Methanol, Ethanol, 1-Propanol und/oder 2-Propanol oder in Gegenwart einer geeigneten Mischung aus Wasser und Alkohol durchgeführt werden.

Die in dem erfindungsgemäßen Verfahren zur Herstellung von thermochemisch modifizierter Stärke eingesetzten Ausgangsstärken sind vorzugsweise Stärken aus stärkespeichernden Pflanzen, insbesondere aus der Gruppe bestehend aus Mais, Weizen, Tapioka, Mungbohne und Kartoffel. Neben den üblicherweise erhältlichen Stärken aus natürlich existierenden Pflanzen sind in jüngerer Zeit zunehmend auch Stärken aus Pflanzen erhältlich, die mittels Mutanten-Selektion oder mittels gentechnologischer Verfahren erzeugt wurden und die beispielsweise in bezug auf ihren quantitativen oder qualitativen Stärkegehalt verändert werden konnten (gentechnologisch modifizierte Stärken). Insbesondere stehen aufgrund dieser Verfahren Stärken aus Mais, Kartoffel und Weizen zur Verfügung, die beispielsweise bezüglich ihres Amylosegehalts erhöht sind und/oder bezüglich ihres Phosphorylierungsgrades deutlich veränderte Eigenschaften aufweisen. Solche Stärken sind ausdrücklich als Ausgangsstärken in dem erfindungsgemäßen Verfahren geeignet.

Beispielsweise sind gentechnologisch modifizierte Stärken aus der nachfolgend genannten Patentliteratur bekannt, wobei die genannten Schriften eine willkürliche Aufzählung und keine bevorzugte oder abschliessende Auswahl darstellen:
WO 90/12876A1, WO 91/19806A1, WO 92/11375A1, WO 92/11376A1, WO 92/11382A1, WO 92/14827A1, WO 94/09144A1, WO 94/11520A1, WO 95/04826A1, WO 95/07355A1, WO 95/26407A1, WO 95/34660A1, WO 95/35026A1, WO 96/15248A1, WO 96/19581A1, WO 96/27674A1, WO 96/34968A1, WO 97/04112A1, WO 97/04113A1, WO 97/11188A1, WO 97/16554A1, WO 97/20040A1, WO 97/22703A1, WO 97/45545A1, WO 98/11181A1, WO 98/15621A1, WO 98/37213A1, WO 98/37214A1, sowie CA 2,061,443, DE 19820607.0, DE 19820608.9, DE 19836097.5, DE 19836098.3, DE 19836099.1, EP-A-0 521 621, EP-A-0 703 314, EP-A-0 737 777, EP-A-0 779 363 oder US 5,300,145.

Stärken mit einem Amylosegehalt von grösser als 40% (w/w) stellen geeignete Ausgangsstärken dar, die zu qualitativ sehr hochwertigen Produkten führen.

Die in dem erfindungsgemäßen Verfahren zur Herstellung von thermochemisch modifizierter Stärke eingesetzten Säuren sind in der Regel organische oder anorganische Säuren, vorzugsweise Mineralsäuren wie z.B. HCl, H₂SO₄, HNO₃ oder H₃PO₄. Der Einsatz von Säuren mit einem etwas schwächeren pKₐ-Wert von bis zu 2,5 ist jedoch ebenfalls gut geeignet.

Die thermochemische Behandlung der Stärke in dem erfindungsgemäßen Verfahren erfolgt in der Regel direkt oder indirekt, so dass eine milde Hydrolyse der glykosidischen Bindungen in den Stärkemolekülen gegeben ist. Am einfachsten wird dies ermöglicht, indem eine verdünnte Lösung der Säure gleichmäßig auf die Stärke gesprüht wird. Gegebenenfalls kann die Säure auch gasförmig mit der Stärke in Kontakt gebracht werden, wichtig ist vor allem, dass eine gleichmäßige und milde Hydrolyse erfolgt und eine zu hohe lokale Säurekonzentration vermieden wird, da dies anderenfalls die Produktqualität beeinträchtigen würde.

Zur Gewährleistung von milden Hydrolysebedingungen sollte die Säure daher im allgemeinen nicht zu hoch konzentriert sein. Die Säure sollte z. B. als verdünnte Lösung in einer Konzentration von etwa 0,05-5 M, vorzugsweise von etwa 0,1-3 M eingesetzt, bzw. mit der Stärke in Kontakt gebracht werden. Die Stärke kann hierbei vorzugsweise mechanisch bewegt (gerührt, gerüttelt, umgewälzt etc.) werden, um lokale Überkonzentrationen der Säure zu vermeiden. Die Säure kann gegebenenfalls warm, heiß, nahe des Siedepunktes oder gegebenenfalls gasförmig mit der Stärke in Kontakt gebracht werden, um das Verfahren und/oder die Produkteigenschaften zu begünstigen, um z.B. die Reaktionszeit zu verkürzen.

Im allgemeinen beträgt das Mengenverhältnis von Säure zu Stärke in dem erfindungsgemäßen Verfahren etwa 1-100 mmol Säure/kg Stärke, vorzugsweise etwa 5-75 mmol/kg, insbesondere etwa 10-60 mmol/kg.

Zum Abschluß der Reaktion, d.h. der Säurehydrolyse, wird in Schritt b) des erfindungsgemäßen Verfahrens mittels einer geeigneten Lauge, gegebenenfalls unter Kühlung neutralisiert, wobei für Anwendungen im Lebensmittelbereich geeignete basischen Substanzen zu bevorzugen sind. Beispielsweise sind im Lebensmittelbereich neben verdünnten Lösungen von NaOH vor allem Sodalösungen im Bereich von etwa 0,01-5 M vorzugsweise etwa 0,05-2 M gebräuchlich. Während des Neutralisierens oder nach dem Neutralisieren wird die Reaktionsmischung auf eine Temperatur zwischen etwa 0 und 35 °C abgekühlt.

Sofern gewünscht, kann das aus dem erfindungsgemäßen Verfahren erhaltene Produkt, d.h. die thermochemisch modifizierte Stärke, nach der Neutralisation getrocknet werden, z.B. durch Strom- oder Fließbetttrocknung oder andere, dem Fachmann bekannte, geeignete Trocknungsverfahren.

Ein weiterer Erfindungsgegenstand sind auch die durch das erfindungsgemäße Verfahren erhältlichen thermochemisch modifizierten Stärken, insbesondere solche, die eine granuläre Struktur aufweisen, und ganz besonders thermochemisch modifizierte Mais-, Weizen-, Tapioka-, Mungbohnen- und/oder Kartoffelstärken, insbesondere mit granulärer Struktur. Dünnkochende Stärken, Dextrine mit ausgeprägter Gelbildungseigenschaft sowie thermoreversibel gelbildende Dextrine die durch das erfindungsgemäße Verfahren erhältlich sind, sind insbesondere bevorzugt. In einer weiterhin bevorzugten Ausführungsform weisen die erfindungsgemäßen thermochemisch modifizierten Stärken eine granuläre Struktur auf.

Ein weiterer Erfindungsgegenstand ist auch die Verwendung von Stärke, mit der Ausnahme von Palerbsenstärke in dem erfindungsgemäßen Verfahren zur Herstellung thermochemisch modifizierter Stärke, insbesondere die Verwendung von Mais-, Weizen-, Tapioka-, Mungbohnen- und/oder Kartoffelstärke, speziell zur Herstellung von Dextrinen mit granulärer Struktur.

Die aus dem erfindungsgemäßen Verfahren erhältlichen thermoreversibei gelbildenden Dextrine sind aufgrund ihrer besonderen Eigenschaft des thermoreversiblen Sol-Gel-Überganges in bestimmten Lebensmitteln oder Lebensmittelzusammensetzungen (Mayonnaisen, Dressings, Eis u.a.) hervorragend z.B. als Fettersatzstoffe geeignet.

Noch ein weiterer Erfindungsgegenstand ist auch die Verwendung der erfindungsgemäßen thermochemisch modifizierten Stärke zur Herstellung von Lebensmitteln, Lebensmittelzusammensetzungen oder Lebensmittelvorprodukten sowie die Verwendung der erfindungsgemäßen thermochemisch modifizierten Stärke als Ersatzstoff für Fett (z.B. in Lebensmitteln wie Margarine, Mayonnaise, Dressings, Eis, Erdnußbutter, Kaffeeweißer etc.) oder als Ersatzstoff für Gelatine z.B. im pharmazeutischen Bereich (Gelatinekapseln etc.), oder im Lebensmittelbereich für Fleischwaren (Aspik, Jus etc.), für Süßwaren (Fruchtgummi, Lakritze etc.) oder zum Andicken sowie Binden von Feinkost- und Milcherzeugnissen (Götterspeise, Puddings, Cremes). Die erfindungsgemäßen thermoreversibel gelbildenden Dextrine weisen neben ihren primären Gelbildungseigenschaften eine für diese Zwecke hervorragende Aromabindefähigkeit, Dispergierbarkeit und/oder Säurestabilität auf.

Eine weiterer Ausführungsform der vorliegenden Erfindung ist daher die Verwendung der aus dem erfindungsgemäßen Verfahren erhältlichen thermoreversibel gelbildenden Dextrine als Fettersatzstoff, vorzugsweise in Lebensmitteln, Lebensmittelzusammensetzungen oder Lebensmittelvorprodukten. Die erfindungsgemäßen thermochemisch modifizierten Stärken auf Basis von Kartoffelstärke verhalten sich ganz besonders geschmacksneutral, so dass deren Einsatz für die oben beschriebenen Anwendungsbereiche in Lebensmitteln besonders bevorzugt ist.

Des weiteren ist daher ein Erfindungsgegenstand ein Lebensmittelvorprodukt, Lebensmittel oder eine Lebensmittelzusammensetzung enthaltend eine erfindungsgemäße thermochemisch modifizierte Stärke, insbesondere ein Fett- oder Gelatineersatzstoff, enthaltend eine erfindungsgemäße thermochemisch modifizierte Stärke, insbesondere thermochemisch modifizierte Kartoffelstärke.

Sofern nicht anders vermerkt, sind alle %-Angaben in Zusammenhang mit der vorliegenden Erfindung Angaben in Gewichts-% (% w/w).

Die nachfolgend in den nachfolgenden Beispielen aufgeführten Stärken oder Stärkeproben, die mit einem Buchstaben gekennzeichnet sind, bedeuten:
- A =: native Stärke aus Kartoffeln der Sorte Désireé (Wildtyp)
- B =: Stärke aus gentechnologisch modifizierter Kartoffeln, z.B. erhältlich gemäß Beispiel 10 der WO 97/11188
- C =: Stärke aus gentechnologisch modifizierten Kartoffeln z.B. erhältlich gemäß Beispiel 7 der WO 97/11188
- D =: Maisstärke, Fa. Cerestar, Krefeld, Deutschland
- E =: Weizenstärke, Fa. Crespel & Deiters, Ibenbüren, Deutschland
- F =: Tapiokastärke, Fa. Thai World Import & Export Co., Ltd
- G =: Amylomaisstärke Hylon V, Fa. Nat. Starch & Chemical GmbH, Neustadt, Deutschland
- H =: Mungbohnenstärke, Fa. SitThi Nam Co, Ltd. Sathorn Thani, Bankok, hailand
- K =: Kartoffelstärke Emsland Stärke GmbH, Emlichheim, Deutschland

Die nachfolgenden Beispiele sollen die Erfindung illustrieren und stellen keinerlei Beschränkung der Erfindung dar.

### Beispiel 1: Herstellung dünnkochender Stärke

Zur Herstellung dünnkochender Stärke wurden etwa 150 g der unterschiedlichen unten näher bezeichneten Stärkeproben unter ständigem Mischen mit 3-9 ml 1 M HCl , d.h. 20-60 mmol / kg Stärke besprüht und in einem Mikrowellenofen bei etwa 250 W Nennleistung unter Rühren innerhalb von etwa 1-2 Minuten auf 60-95°C erhitzt. Anschließend wurde mit 2-10 ml einer 1 M Sodalösung neutralisiert und abgekühlt.

### Beispiel 2: Viskosimetrische Charakterisierung thermochemisch modifizierter Stärken

Die gemäß Beispiel 1 hergestellten thermochemisch modifizierten Stärken wurden viskosimetrisch mit Hilfe eines Micro-Amylo-Viscographen (Brabender oHG, Duisburg, Deutschland) untersucht. Als Vergleichsprodukt diente ein handelsübliches Produkt, Perfectagel MPT (Ref. No. 34384/02) der Fa. Avebe (Veendam, NL).

Die Brabender-Viskositäten wurden folgendermaßen bestimmt: Es wurden 100g einer 8,5%igen Stärke-Suspension unter ständigem Rühren mit einer Geschwindigkeit von 3K/min auf 90°C (Tabelle 1A) bzw.die angegebene Temperatur erhitzt, danach die Temperatur 15 Minuten lang bei 90°C konstant gehalten, anschließend mit 3 K/min auf 30°C abgekühlt und dabei die Drehmomentsänderung (Meßbereich 250 cmg) gemessen (s. Tabelle 1). Die Angabe der Viskositäten erfolgt in Brabender-Einheiten, abgekürzt [BE].

**Tabelle 1A:**

| Viskositätsdaten verschiedener Stärkeproben | | | |
|---|---|---|---|
| | Peakviskosität | Heißkleisterviskosität ¹⁾ | Kaltviskosität ²⁾ |
| Perfectagel MPT | 130 BE ± 10 | 20 BE ± 5 | 100 BE ± 5 |
| Thermochemisch modifizierte Stärke C (32% Amylose) | 195 BE ± 10 | 50 BE ± 5 | 510 BE ± 10 |
| Stärke K, nativ | 2110 BE ± 15 | 500 BE ± 10 | 1400 BE ± 10 |
| Thermochemisch modifizierte Stärke K | 300 BE ± 10 | 50 BE ± 5 | 340 BE ± 10 |

| | | | |
|---|---|---|---|
| ¹⁾ 15 min bei 90°C; | | | |
| ²⁾ 30°C | | | |

**Tabelle 1B:**

| Einfluß der Modifizierungstemperatur auf die Viskosität | | | | | | | | |
|---|---|---|---|---|---|---|---|---|
| | Stärke B Nativ [BE] | Erhitzung bei | | | Stärke K Nativ [BE] | Erhitzung bei | | |
| | | 61 °C [BE] | 71°C [BE] | 80°C [BE] | | 62°C [BE] | 69°C [BE] | 73°C [BE] |
| Peakviskosität | 664 | 425 | 332 | 197 | 1871 | 1388 | 1088 | 928 |
| Heißkleisterviskosität ¹ | 478 | 267 | 224 | 125 | 454 | 301 | 259 | 209 |
| Kaltviskosität ²⁾ | 1377 | 751 | 603 | 317 | 1304 | 841 | 723 | 632 |

| | | | | | | | | |
|---|---|---|---|---|---|---|---|---|
| ¹⁾ 15 min bei 90°C; | | | | | | | | |
| ²⁾ 30°C | | | | | | | | |

### Beispiel 3: Herstellung gelbildender Dextrine

Die einzelnen in Tabelle 2 (unten) aufgeführten Stärkeproben wurden auf etwa 8-9% Feuchtigkeitsgehalt getrocknet. 100 g der Stärke wurden jeweils mit 1-3,75 ml einer 2 M HCl-Lösung (20-75 mmol Säure/kg Stärke) besprüht und in einem rotierenden Rundkolben (250 ml) 5-20 Minuten in einem Ölbad von Raumtemperatur (etwa 23°C) auf eine Temperatur von 90-105 °C erhitzt, danach entweder sofort oder nach der unten genannten Heißhaltezeit mittels 1 M Sodalösung neutralisiert und abgekühlt.

Zur nachfolgenden Charakterisierung der Dextrine wurden 20%ige Aufkochungen bei 90°C (Haake Rotovisko RV 12, Fa. Haake, Karlsruhe, Deutschland) oder bei 120 °C (Autoklav Typ KL 51, Fa. Wolf) in zylindrische Gefässe aus zwei übereinanderliegenden Ringen (je 20mm hoch, Durchmesser 25mm) gefüllt, einen Tag bei Raumtemperatur (23 ± 2°C) gelagert und anschließend die Gelfestigkeit gemessen. Die Messung der Gelfestigkeit erfoigte nach etwa 24 Stunden Lagerung bei Raumtemperatur mit einem Texture Analyser (TA.XT2 Stable Mikro Systems, Heslemare Surrey GU 27 3AY, Großbritannien) durch einmaliges Komprimieren des Gels mit einer ebenen Kalotte (Durchmesser 24,5 mm). Eine plane Geloberfläche wurde erhalten, indem das erstarrte Gel zwischen den beiden Ringen durchschnitten wurde. Die Thermoreversibilität der Gelbildung wurde durch Aufschmelzen geprüft sowie das Aussehen (Farbe, Glanz), die Konsistenz (pastenartig) außerdem die Homogenität und der Geschmack beurteilt.

Tabellen 2 A-D zeigen die Dextrin-Eigenschaften bezüglich Gelfestigkeit, Thermoreversibilität der Gelbildung sowie deren optische Erscheinungsform.

Gelfestigkeitswerte in einem Bereich von etwa 5 ± 3 N weisen auf eine im allgemeinen für einen Fettersatzstoff geeignete Gelfestigkeit hin. Gut geeignete Fettersatzstoffe zeichnen sich des weiteren durch eine möglichst weiße Farbe, eine glänzende Oberfläche, eine homogene fettartige Konsistenz sowie eine thermoreversible Gelbildung aus.

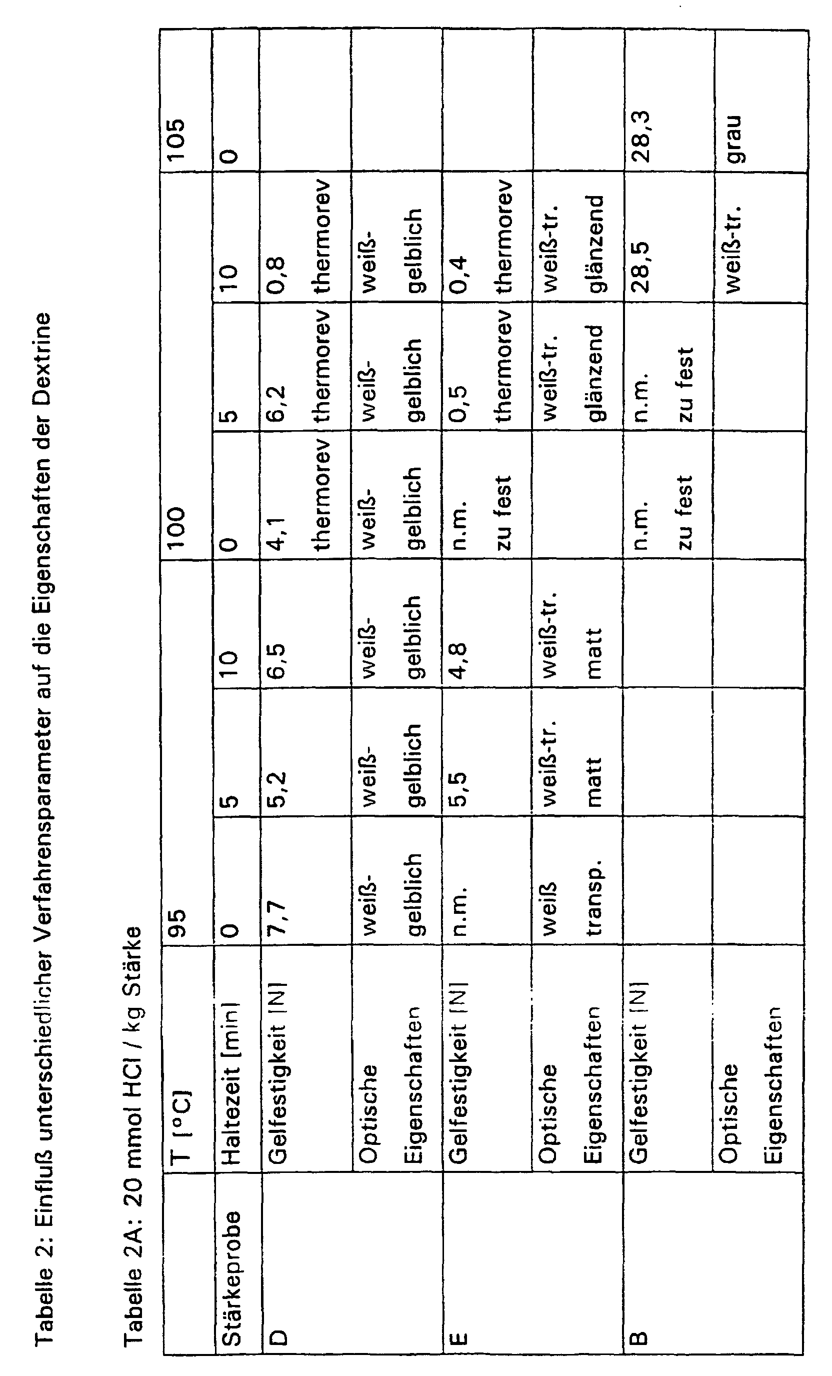

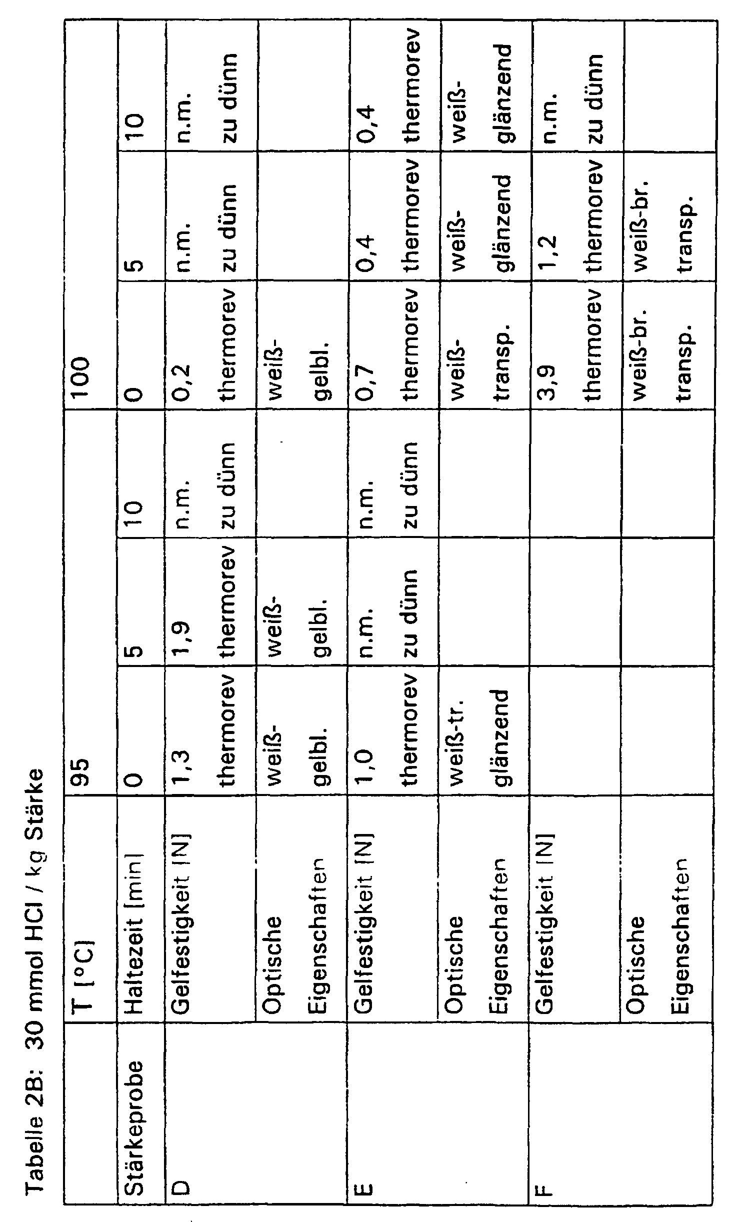

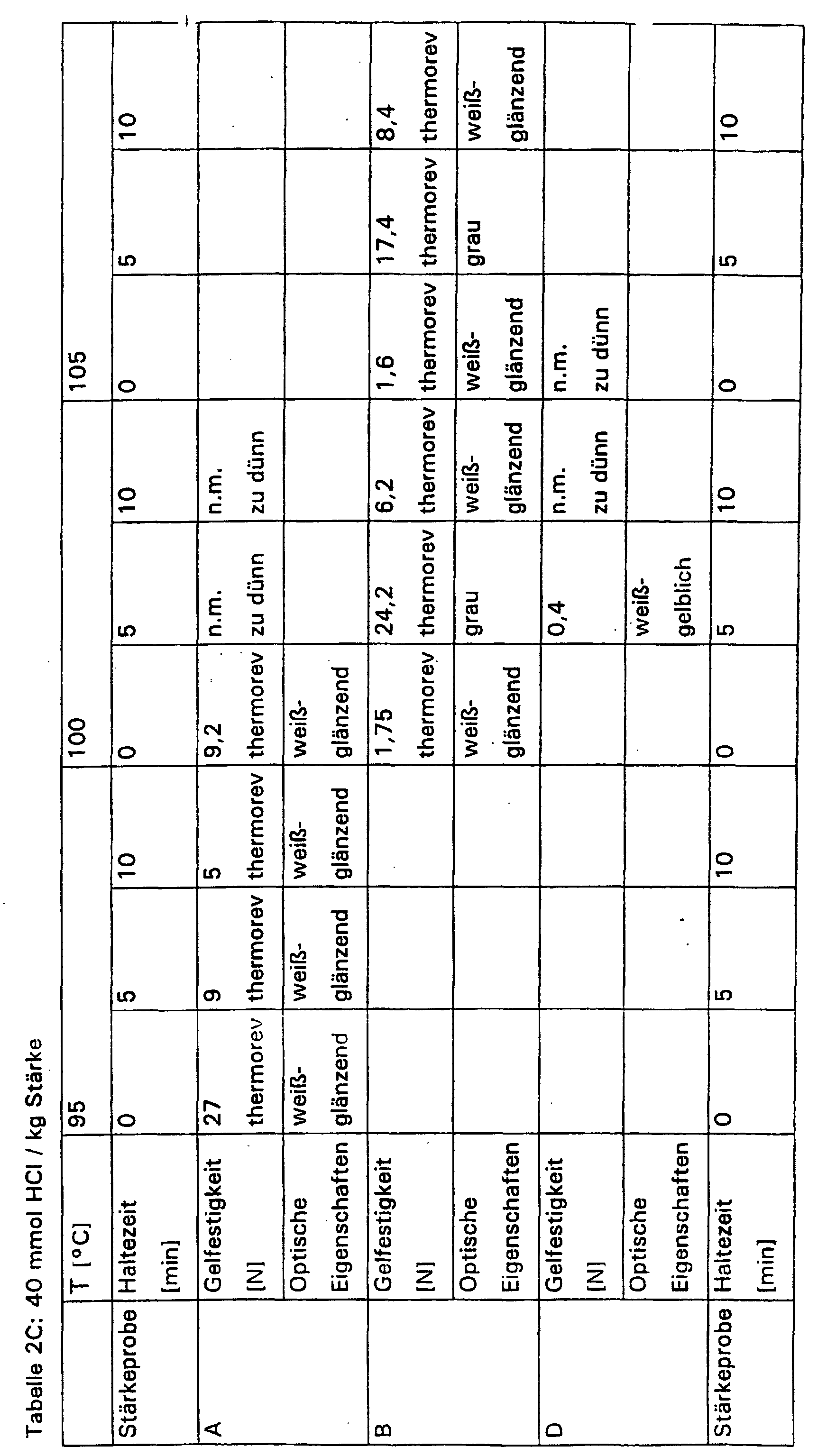

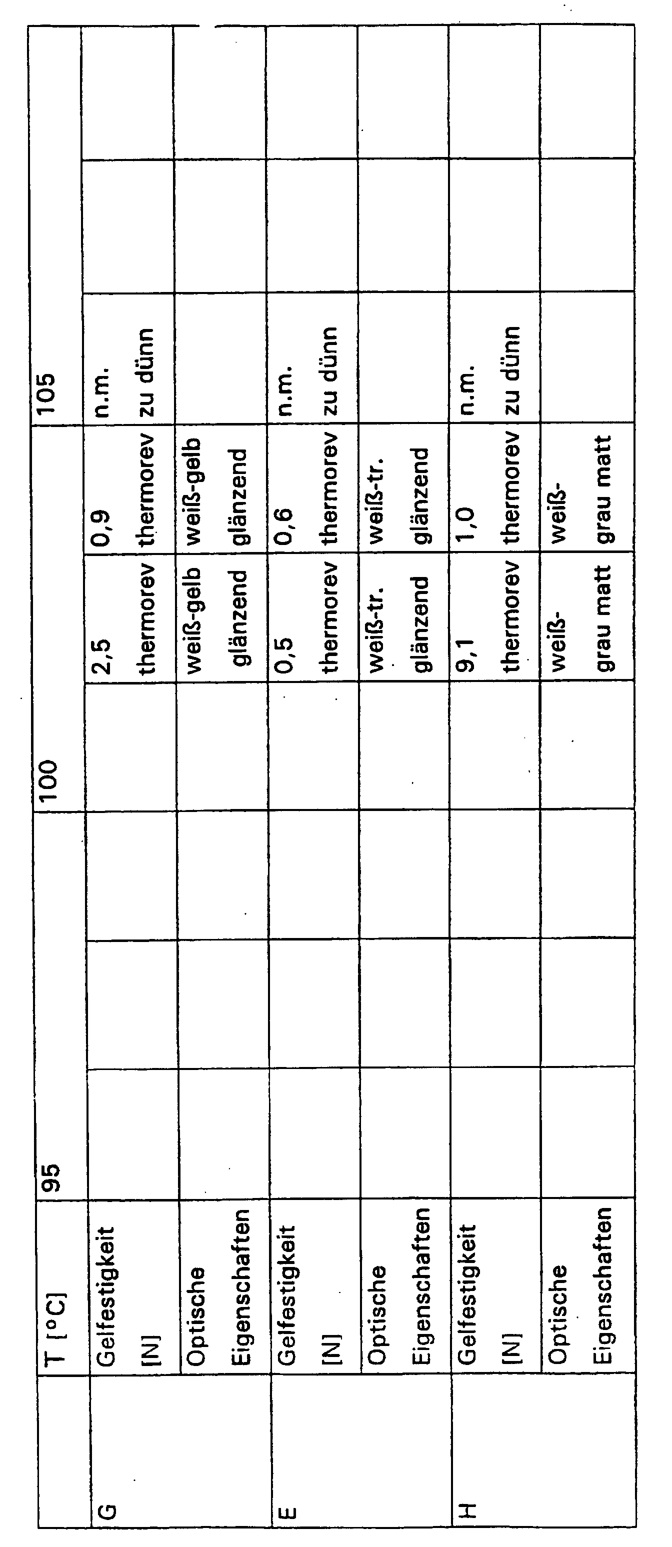

**Tabelle 2D:**

| 60 mmol HCl / kg Stärke | | | | |
|---|---|---|---|---|
| | T [°C] | 100 | | |
| Stärkeprobe | Haltezeit [min] | 0 | 5 | 10 |
| B | Gelfestigkeit [N] | 11,1 thermorev | 1,15 thermorev | n.m. zu dünn |
| | Optische Eigenschaften | leicht transp. | weiß glänzend | |
| Legende zu den Tabellen 2 A-D: n.m. = nicht meßbar thermorev = thermoreversible Gelbildung transp. = transparent weiß-tr. = weiß-transp. = weiß-transparent weiß-br. = weiß-braun | | | | |

### Beispiel 3B: Einfluß der Erhitzungsgeschwindigkeit auf die Dextrineigenschaften

Entsprechend den Angaben in Beispiel 3 wurde eine kommerziell erhältliche Kartoffelstärke (Stärkeprobe K) in Gegenwart von 40 mmol HCl / kg Stärke in unterschiedlicher Geschwindigkeit von Raumtemperatur (etwa 23°C) auf T=95°C (ohne Haltezeit) erhitzt.

**Tabelle 2E:**

| Einfluß der Erhitzungsgeschwindigkeit auf die Dextrineigenschaften | | |
|---|---|---|
| Erhitzungszeit [min] | Gelfestigkeit [N] | Geleigenschaften |
| 15 | 8,3 ± 0,5 | pastöses Gel, weiß, thermoreversibel |
| 120 | 39,9 ± 0,1 | festes Gel, gräulich, irreversibel |
| 150 | 32,0 ± 0,5 | festes Gel, gräulich, irreversibel |
| 165 | 5,6 ± 0,1 | nicht pastös, gräulich, inhomogen |
| 180 | n.m. | kein Gel, flüssig, weiß |
| 360 | n.m. | kein Gel, flüssig, transparent |

### Beispiel 4: Dispergierbarkeit verschiedener Dextrine

Die erfindungsgemäß nach Beispiel 3 (mit 40 mmol HCl bei T = 105°C, einer Haltezeit von 5 Minuten und einer Heizgeschwindigkeit von 8K/min) hergestellten Dextrine wurden in bezug auf ihre Dispergierbarkeit und Temperaturbeständigkeit untersucht und mit einem kommerziell erhältlichen Handelsprodukt der Firma Avebe (Paselli™-SA 2) verglichen.

Zur Bestimmung der Dispergierbarkeit wurden jeweils 2 g der Stärke-Proben in 100 ml kaltem Wasser (25°C) eingerührt. Die Dispersion wurde nach 1 min durch ein 100 µm Sieb abgegossen und im Durchgang die Feststoffanteile bestimmt (Tabelle 3).

**Tabelle 3:**

| Dispergierbarkeit von Dextrinen | | | |
|---|---|---|---|
| | Paselli™-SA 2 | Stärkeprobe B | Stärkeprobe K |
| Dispergierbarkeit | 63% | 98 % | 98% |

### Beispiel 5: Temperaturbeständigkeit der Dextrine

Die nachstehende Tabelle 4 zeigt die Gelfestigkeit der erfindungsgemäß hergestellten Dextrine (gemäß Beispiel 3 mit T= 105°C, 5 Minuten Haltezeit, Heizgeschwindigkeit von 8K/min) in Abhängigkeit vom Feststoffgehalt im Vergleich zu einem kommerziell erhältlichen Fettersatzstoff (Paselli™ SA 2 der Fa. Avebe).

**Tabelle 4:**

| Temperaturbeständigkeit der Dextrine | | | | | | |
|---|---|---|---|---|---|---|
| Trockensubstanz [%] | Gelfestigkeit [N] | | | | | |
| | Paselli™-SA 2 | | Stärkeprobe B | | Stärkeprobe K | |
| | 90°C | 120°C | 90°C | 120°C | 90°C | 120°C |
| 20 | 4,3 | 1,3 | 2,7 | 2,8 | 2,6 | 0,6 |
| 25 | 11,3 | 7,4 | 7,6 | 13,4 | 8,6 | 1,7 |
| 30 | 17,4 | 14,1 | 9,0 | 26,5 | 13,4 | 6,1 |

Aus der Tabelle 4 geht eine deutlich verbesserte thermische Stabilität der -erfindungsgemäßen, auf 120°C erhitzten Dextrine hervor, die aus Stärkeprobe B hergestellt wurden.

### Beispiel 6: Säurestabilität der Gelbildungseigenschaften von Dextrinen

Die nachstehende Tabelle 5 zeigt die Gelfestigkeit der erfindungsgemäßen Dextrine (hergestellt gemäß Beispiel 3 mit T= 105°C und 5 Minuten Haltezeit, Heizgeschwindigkeit von 8K/min) in Abhängigkeit des pH-Wertes bei einem Feststoffgehalt von 20% nach dem Erhitzen auf 90°C im Vergleich zu einem kommerziell erhältlichen Fettersatzstoff (Paselli™ SA 2 der Fa. Avebe).

**Tabelle 5:**

| pH-Wert-Abhängigkeit der Gelbildung von Dextrinen | | | | | | |
|---|---|---|---|---|---|---|
| PH-Wert | Gelfestigkeit [N] | | | | | |
| | Paselli™-SA 2 | | Stärkeprobe B | | Stärkeprobe K | |
| 2,9 | 2,3 | 50% | 7,5 | 82% | 3,2 | 76% |
| 4,0 | 2,9 | 63% | 9,0 | 98% | 3,3 | 79% |
| 5,0 | 3,3 | 72% | 9,1 | 99% | 4,1 | 98% |
| 6,0 | 4,6 | 100% | 9,2 | 100% | 4,2 | 100% |

Aus der Tabelle 5 geht eine deutlich verbesserte Säurestabilität der erfindungsgemäßen Dextrine hervor, die aus der Stärkeprobe B hergestellt wurden.

## Patentansprüche

1. Verfahren zur thermochemischen Modifizierung von Stärke, mit Ausnahme von Palerbsenstärke, worin
a) Stärke mit einem Amylosegehalt von größer als 40% (w/w) und einem Feuchtigkeitsgehalt von höchstens etwa 15-20% in Gegenwart einer Säure mit einer Geschwindigkeit von mindestens 3 K/min auf eine Temperatur von nicht höher als etwa 50-120°C erhitzt wird, und
b) anschließend auf einen pH-Wert von etwa 5,5-7,5 eingestellt wird,
worin vor oder während des Neutralisierens die in Schritt a) genannte Temperatur für einen Zeitraum von etwa 5 Minuten bis 1 Stunde beibehalten wird und/oder nach Erreichen der in Schritt a) genannten Temperatur auf etwa 0-35°C abgekühlt wird.

2. Verfahren zur thermochemischen Modifizierung von Stärke nach Anspruch 1, worin eine Stärke eingesetzt wird, ausgewählt aus der Gruppe bestehend aus Mais-, Weizen-, Tapioka-, Mungbohnen- und Kartoffelstärke.

3. Verfahren zur thermochemischen Modifizierung von Stärke nach einem oder mehreren der Ansprüche 1 bis 2, worin die Stärke mit einer Geschwindigkeit von etwa 3-50 K/min auf eine Temperatur von etwa 60-120°C erhitzt und anschließend neutralisiert wird.

4. Verfahren zur thermochemischen Modifizierung von Stärke nach einem oder mehreren der Ansprüche 1 bis 3, worin die Stärke in Schritt a) auf eine Temperatur zwischen der Verkleisterungstemperatur und 15°C oberhalb der Verkleisterungstemperatur der Ausgangsstärke erhitzt wird.

5. Verfahren zur thermochemischen Modifizierung von Stärke nach einem oder mehreren der Ansprüche 1 bis 3, worin die Stärke in Schritt a) auf eine Temperatur von größer als etwa 15-50°C oberhalb der Verkleisterungstemperatur der Ausgangsstärke erhitzt wird.

6. Thermochemisch modifizierte Stärke erhältlich nach einem oder mehreren Verfahren der Ansprüche 1 bis 5.

7. Thermochemisch modifizierte Stärke nach Anspruch 6, basierend auf einer oder mehreren Stärken, ausgewählt aus der Gruppe von Mais-, Weizen- und Kartoffelstärke.

8. Thermochemisch modifizierte Stärke nach einem oder mehreren der Ansprüche 6 bis 7, **gekennzeichnet durch** eine granuläre Struktur.

9. Verwendung von gentechnologisch modifizierter Stärke in einem Verfahren nach einem oder mehreren der Ansprüche 1 bis 5 zur Herstellung von thermochemisch modifizierter Stärke.

10. Verwendung einer thermochemisch modifizierten Stärke nach einem oder mehreren der Ansprüche 6-8 zur Herstellung von Lebensmitteln, Lebensmittelzusammensetzungen oder Lebensmittelvorprodukten.

11. Verwendung einer thermochemisch modifizierten Stärke nach einem oder mehreren der Ansprüche 6-8 oder erhältlich nach einem oder mehreren Verfahren gemäß Anspruch 1-5 als Fettersatzstoff.

12. Verwendung einer thermochemisch modifizierten Stärke nach einem oder mehreren der Ansprüche 6-8 oder erhältlich nach einem oder mehreren Verfahren gemäß Anspruch 1-5 als Gelatineersatzstoff.

13. Lebensmittelvorprodukt, Lebensmittel oder Lebensmittelzusammensetzung enthaltend eine thermochemisch modifizierte Stärke gemäß einem oder mehreren der Ansprüche 6-8.

14. Fettersatzstoff enthaltend eine thermochemisch modifizierte Stärke gemäß einem oder mehreren der Ansprüche 6-8.

15. Gelatineersatzstoff enthaltend eine thermochemisch modifizierte Stärke gemäß einem oder mehreren der Ansprüche 6-8.

## Claims

1. A process for the thermochemical modification of starch, with the exception of green-pea starch, in which
a) starch having an amylose content of greater than 40% (w/w) and a moisture content of a maximum of about 15-20% is heated in the presence of an acid at a rate of at least 3 K/min to a temperature no higher than about 50-120°C, and
b) is then set to a pH of about 5.5-7.5,
in which, before or during the neutralization, the temperature specified in step a) is held for a period of about 5 minutes to 1 hour and/or the starch is cooled to about 0-35°C after reaching the temperature specified in step a).

2. The process for the thermochemical modification of starch as claimed in claim 1, in which a starch is used which is selected from the group consisting of corn starch, wheat starch, tapioca starch, mung bean starch and potato starch.

3. The process for the thermochemical modification of starch as claimed in one or more of claims 1 to 2, in which the starch is heated at a rate of 3-50 K/min to a temperature of about 60-120°C and is then neutralized.

4. The process for the thermochemical modification of starch as claimed in one or more of claims 1 to 3, in which the starch is heated in step a) to a temperature between the pasting temperature and 15°C above the pasting temperature of the starting starch.

5. The process for the thermochemical modification of starch as claimed in one or more of claims 1 to 3, in which the starch is heated in step a) to a temperature more than about 15-50°C above the pasting temperature of the starting starch.

6. A thermochemically modified starch which is obtainable by the process of one or more of claims 1 to 5.

7. The thermochemically modified starch as claimed in claim 6, based on one or more starches selected from the group consisting of corn starch, wheat starch and potato starch.

8. The thermochemically modified starch as claimed in one or more of claims 6 to 7, which features a granular structure.

9. The use of genetically modified starch in a process as claimed in one or more of claims 1 to 5 for producing thermochemically modified starch.

10. The use of a thermochemically modified starch as claimed in one or more of claims 6-8 for producing foods, food compositions or food intermediate products.

11. The use of a thermochemically modified starch as claimed in one or more of claims 6-8 or obtainable by one or more processes as claimed in claims 1-5 as fat substitute.

12. The use of a thermochemically modified starch as claimed in one or more of claims 6-8 or obtainable by one or more processes as claimed in claims 1-5 as gelatin substitute.

13. A food intermediate product, food or food composition comprising a thermochemically modified starch as claimed in one or more of claims 6-8.

14. A fat substitute comprising a thermochemically modified starch as claimed in one or more of claims 6-8.

15. A gelatin substitute comprising a thermochemically modified starch as claimed in one or more of claims 6-8.

## Revendications

1. Procédé de modification thermochimique d'amidon, à l'exception de l'amidon de pois, dans lequel
a) on chauffe de l'amidon d'une teneur en amylose de plus de 40% (en poids) et d'une teneur en humidité d'un maximum d'environ 15 à 20%, en présence d'un acide et avec un gradient d'au moins 3 K/minute, à une température l'excédant pas environ 50 à 120°C, et
b) on ajuste ensuite à un pH d'environ 5,5 à 7,5,
dans lequel, avant ou pendant la neutralisation, la température mentionnée à l'étape a) est maintenue pendant un laps de temps d'environ 5 minutes à 1 heure et/ou, une fois atteinte la température mentionnée à l'étape a), on refroidit à environ 0 à 35°C.

2. Procédé de modification thermochimique d'amidon selon la revendication 1, dans lequel on met en oeuvre un amidon choisi dans le groupe formé par les amidons de maïs, de froment, de manioc, de haricot mungo et de pomme de terre.

3. Procédé de modification thermochimique d'amidon selon une ou plusieurs des revendications 1 à 2, dans lequel l'amidon est chauffé, avec un gradient d'environ 3 à 50 K/minute, à une température d'environ 60 à 120°C et est neutralisé ensuite.

4. Procédé de modification thermochimique d'amidon selon une ou plusieurs des revendications 1 à 3, dans lequel l'amidon est, dans l'étape a), chauffé à une température située entre la température d'empesage et 15°C au-dessus de la température d'empesage de l'amidon de départ.

5. Procédé de modification thermochimique d'amidon selon une ou plusieurs des revendications 1 à 3, dans lequel l'amidon est chauffé, dans l'étape a), à une température supérieure à environ 15 à 50°C au-dessus de la température d'empesage de l'amidon de départ.

6. Amidon thermochimiquement modifié que l'on peut obtenir selon une ou plusieurs des revendications 1 à 5.

7. Amidon thermochimiquement modifié selon la revendication 6, à base d'un ou plusieurs amidons choisis dans le groupe formé par les amidons de maïs, de froment et de pomme de terre.

8. Amidon thermochimiquement modifié selon une ou plusieurs des revendications 6 à 7, **caractérisé par** une structure granulaire.

9. Utilisation d'amidon de modification génétique dans un procédé selon une ou plusieurs des revendications 1 à 5 pour la préparation d'amidons thermochimiquement modifiés.

10. Utilisation d'un amidon thermochimiquement modifié selon une ou plusieurs des revendications 6 à 8 pour la préparation de denrées alimentaires, de compositions de denrées alimentaires ou de produits primaires pour denrées alimentaires.

11. Utilisation d'un amidon thermochimiquement modifié selon une ou plusieurs des revendications 6 à 8 ou que l'on peut obtenir par un ou plusieurs procédés selon les revendications 1 à 5 en tant que succédané de graisse.

12. Utilisation d'un amidon thermochimiquement modifié selon une ou plusieurs des revendications 6 à 8 ou que l'on peut obtenir par un ou plusieurs procédés selon les revendications 1 à 5 en tant que succédané de gélatine.

13. Produit primaire pour denrées alimentaires ou composition de denrées alimentaires contenant un amidon thermochimiquement modifié selon une ou plusieurs des revendications 6 à 8.

14. Succédané de graisse contenant un amidon thermochimiquement modifié selon une ou plusieurs des revendications 6 à 8.

15. Succédané de gélatine contenant un amidon thermochimiquement modifié selon une ou plusieurs des revendications 6 à 8.
